# EUROPÄISCHE PATENTANMELDUNG

(11) **EP 4 470 948 A1**
(43) Veröffentlichungstag der Anmeldung: **04.12.2024**
(21) Anmeldenummer: 23176962.1
(22) Anmeldetag: 02.06.2023
(51) Int. Cl.: B65G 11/16, B65G 47/44, B65G 11/20

(54) **ENDSTELLE FÜR EINEN SORTER, SORTER MIT EINER ENDSTELLE UND VERFAHREN ZUM ENTNEHMEN ODER AUSSCHLEUSEN EINES TRANSPORTGUTS MIT EINER ENDSTELLE**

(71) Anmelder: BEUMER Group GmbH & Co. KG, 59269 Beckum (DE)
(72) Erfinder: DIRKMANN, Markus, 59302 Oelde (DE); DEMANDT, Christoph, 59329 Wadersloh-Liesborn (DE)
(74) Vertreter: Angerhausen, Christoph

(57) **Zusammenfassung**

Die Erfindung betrifft eine Endstelle (1) für einen Sorter (102), aufweisend eine Rutsche (2) und einen Sammelbereich (4) zur Entnahme eines Transportguts (5) aus der Endstelle, wobei die Rutsche (2) dazu eingerichtet ist, das Transportgut (5) zu dem Sammelbereich (4) zu befördern, wobei, wenn das Transportgut (5) von der Rutsche (2) befördert ist, das Transportgut (5) auf einer Oberfläche (6) der Rutsche (2) rutscht, wobei die Oberfläche (6) zumindest abschnittsweise ein Textil (7) mit freistehenden Fasern ist oder aufweist. Ein weiterer Aspekt der Erfindung betrifft einen Sorter (102). Noch ein weiterer Aspekt der Erfindung betrifft ein entsprechendes Verfahren.

## Beschreibung

Die Erfindung betrifft eine Endstelle für einen Sorter, und einen entsprechenden Sorter. Derartige Sorter werden beispielsweise in Sortieranlagen oder Verteilanlagen eingesetzt, z.B. in der CEP-Branche ("Courier, Express, Parcel").

Sortier- und Verteilanlagen gewinnen immer mehr an Bedeutung für die Intralogistik in den großen Logistikunternehmen. Immer mehr Stückgüter müssen in kürzerer Zeit zum richtigen Ort, mit der richtigen Qualität und adäquaten Kosten überführt werden. Um diesem Streben gerecht zu werden, ist der Einsatz von Hochleistungssortiersystemen unumgänglich. Diese Systeme sind in der Lage bis zu 40.000 Stückgüter in einer Stunde zu sortieren und verteilen. Mit diesen Anlagen können fast alle Arten von Fördergütern annähernd vollautomatisch verteilt werden.

Häufig fassen die Sortierziele, auch Endstellen genannt, in der Regel 50 bis 150 Fördergüter, die in der Endstelle gespeichert werden. Für große Hochleistungssortierzentren ist deshalb in der Regel eine große Anzahl an Endstellen erforderlich. Diese nehmen zumeist einen hohen Anteil, von bis zu 50 %, des gesamten Investments ein. Durch die kontinuierlich steigenden Anforderungen innerhalb der CEP-Dienste und durch nachhaltiges Marktwachstum im E-Commerce stehen diese unter einem großen Investitionsdruck. Es muss damit gerechnet werden, dass für die Speicherendstellen bis zu 70 % der Sorter-Grundfläche eingeplant werden muss. Für den Anlagenbetreiber ist es daher von großer Bedeutung, dass die Endstellen ihrer Anlagen in einem kosteneffektiven Rahmen gehalten werden. Aus diesem Grund entscheiden sich die Betreiber meistens für eine kostengünstigere Schwerkraftrutsche mit speichernden Eigenschaften. Andererseits werden die Kundenzufriedenheit und eine garantierte und verbesserte Lieferqualität für die Anlagenbetreiber zu wichtigen Themen. Dabei sollen Produktbeschädigungen so weit wie möglich minimiert werden. Große Staudrücke und hohe Geschwindigkeiten der Sortiergüter in den Schwerkraftendstellen sind dabei zwei der größten Beschädigungsfaktoren.

Die VDI-Richtlinie 3312 definiert beispielsweise Aufgaben und prinzipiellen Aufbau von Endstellen. Maßgebend ist demnach, dass die Endstelle eine schonende und zuverlässige Abförderung des Sortiergutes vom Sorter, eine manuelle Entnahme der Sortiergüter aus dem Sortierprozess, eine automatische Übergabe an weiterführende Förder- oder Verarbeitungsprozesse und ein Aufspeichern des Sortiergutes ermöglicht.

Eine Endstelle ist beispielsweise aus der EP 0 947 448 A1 bekannt. Die Endstelle hat eine Rutsche aus Stahl mit verschiedenen Abschnitten, wobei in mindestens einem Abschnitt Gummirollen vorgesehen sind, so dass Pakete abwechselnd über die Stahloberfläche und die Gummirollen rutschen.

Die DE 10 2018 215 773 A1 offenbart eine adaptive Rollenbahn, die steuerbare Rollen aufweist. Die Rollen können derart betätigt werden, dass von der Rollenbahn geförderte Objekte abgebremst werden können.

Eine Endstelle ist beispielsweise aus der EP 3 689 795 A1 bekannt. Die Endstelle hat eine Rutsche mit einer Oberfläche aus rostfreiem Stahl, wobei Pakete auf der Oberfläche aus rostfreiem Stahl rutschen. Die Endstelle weist eine Bremse zum Stoppen der Pakete auf, wobei die Bremse in Abhängigkeit eines Sensors betätigt wird. Die Bremse ist durch Gummirollen verwirklicht, bzw. weist Gummirollen auf.

Die bekannten Endstellen sind apparativ aufwendig, und vergleichsweise teuer und wartungsintensiv.

Es ist deshalb die Aufgabe der Erfindung, eine Endstelle für einen Sorter und einen entsprechenden Sorter bereitzustellen, mit denen Beschädigungen von Transportgütern, z.B. Paketen oder dergleichen, verhindert oder zumindest reduziert werden, und die einfach und günstig in der Herstellung und apparativ umsetzbar sind.

Insbesondere ermöglicht die vorliegende Erfindung eine Reduzierung der Geschwindigkeit des Transportguts in der Endstelle und reduzierte Staudrücke.

Diese Aufgabe wird durch eine Endstelle nach Anspruch 1, einen Sorter nach Anspruch 13 und ein Verfahren nach Anspruch 14 gelöst. Die jeweiligen Unteransprüche betreffen besonders vorteilhafte Ausführungsformen der Erfindung.

Ein Aspekt der Erfindung betrifft eine Endstelle für einen Sorter, aufweisend eine Rutsche und einen Sammelbereich zur Entnahme eines Transportguts aus der Endstelle, wobei die Rutsche dazu eingerichtet ist, das Transportgut zu dem Sammelbereich zu befördern, wobei, wenn das Transportgut von der Rutsche befördert ist, das Transportgut auf einer Oberfläche der Rutsche rutscht, dadurch gekennzeichnet, dass die Oberfläche zumindest abschnittsweise ein Textil mit freistehenden Fasern ist oder aufweist.

In einigen Ausführungsformen kann mindestens ein oder das Textil entlang und/oder auf der gesamten Fläche der Rutsche und/oder der Oberfläche angeordnet sein. In einigen Ausführungsformen kann die Rutsche und/oder die Oberfläche vollständig und/oder lückenlos mit mindestens einem oder dem Textil bedeckt sein.

Dadurch, dass das Textil freistehende Fasern aufweist, können Transportgüter auf eine möglichst konstante Geschwindigkeit abgebremst sein oder werden. Die Reibwerte zwischen den Fasern des Textils und dem Transportgut, und/oder die Geschwindigkeiten, können zudem gleichmäßiger und unabhängiger von dem Gewicht, den Abmaßen und der Oberflächenbeschaffenheit und/oder Material des Transportguts sein. Durch das Textil können Transportgüter schonender in die Sammelstelle übergeben werden und die Aufprallenergie bzw. die Impuls-Intensität bei einem Zusammenstoß mit anderen Transportgütern in der Sammelendstelle (und/oder je nach Anzahl der bereits gespeicherten Transportgüter auch in der Rutsche) reduziert sein oder werden. Das Textil kann zudem für das Transportgut schonend sein, so dass das Transportgut durch das Textil nicht oder nur vernachlässigbar gering beschädigt, z.B. zerkratzt, sein oder werden kann. Das Textil kann eine lange Haltbarkeit aufweisen, so dass ein geringer Wartungsaufwand und/oder eine geringe Downtime ermöglicht sein kann. Das Textil kann zudem kostengünstig sein. Das Textil kann einfach, schnell und unkompliziert ausgetauscht werden.

Der Sorter kann in einigen Ausführungsformen ein Quergurtsorter, ein Kippschalensorter, einen Fallklappensorter, ein Taschensorter, ein Hängeförderer und/oder ein Schwerkraftförderer sein oder aufweisen. Der Sorter kann mindestens eine Transporteinheit aufweisen. Die Transporteinheit kann ein entsprechendes Lastaufnahmemittel des Sorters sein oder aufweisen.

Die Endstelle kann einen Übergabebereich zur Übergabe des Transportguts aufweisen. Die Rusche kann zwischen dem Übergabebereich und dem Sammelbereich angeordnet sein. Die Rutsche kann dazu eingerichtet sein, ein an den Übergabebereich übergebenes Transportgut zu dem Sammelbereich zu befördern.

Das Textil kann ein Schnittflorteppich sein oder aufweisen. Das Textil kann ein Schnittvelour sein oder aufweisen. Das Textil kann ein Substrat aufweisen, von dem die Fasern abstehen können. Die Fasern können mit dem Substrat verbunden sein, z.B. eingenäht oder genadelt.

Das Textil kann getuftet sein. Alternativ oder zusätzlich kann die Oberfläche getuftet sein. Mit Tuften wird üblicherweise eine Herstellungstechnik für dreidimensionale textile Flächen bezeichnet. Das Grundprinzip eines Tuftingprozesses kann dem einer Nähmaschine ähnlich sein. Ein Grundgarn kann dabei durch Nadeln in ein Grundmaterial und/oder Substrat eingenadelt werden. Das Grundmaterial und/oder Substrat kann in den meisten Fällen ein Vliesstoff oder ein Gewebe aufweisen. Es sind aber auch andere Grundmaterialien und/oder Substrate möglich. Beim Tuften kann zunächst eine Oberfläche des Textils aus vielen kleinen Schlingen gebildet werden, die durch das Grundmaterial und/oder Substrat genadelt werden können. Um diese Schlingen herzustellen, kann eine Nadel mit einem Garn durch das Grundmaterial und/oder Substrat fahren. An der anderen Seite kann das Garn durch einen Greifer festgehalten werden, und die Nadel wieder zurückfahren. Anschließend können die Schlingen, die durch das Tuften entstanden sind, durchgeschnitten werden. Dies kann bei oder nach dem Greifer erfolgen, sodass z.B. gleichzeitig die genadelte Faser festgehalten und anschließend geschnitten werden kann. Dadurch können die freistehenden Fasern des Textils gebildet sein oder werden. Das Tuften, und/oder das Bilden der freistehenden Fasern, ist aber nicht zwingend auf den vorstehend beschriebenen Prozess beschränkt.

Das Textil kann die Oberfläche vollständig bedecken. Es kann vorgesehen sein, dass das Textil entlang der gesamten Länge und/oder Breite der Rutsche angeordnet sein kann. In einigen Ausführungsformen kann auch vorgesehen sein, dass das Textil nur abschnittsweise entlang der Rutsche angeordnet ist. In einigen Ausführungsformen kann mehr als ein Textil vorgesehen sein, wobei jedes der Textile in einem bestimmten Abschnitt der Rutsche angeordnet sein kann. Sind mehr als ein Textil vorgesehen, so können mindestens zwei der Textile unterschiedliche Eigenschaften, z.B. unterschiedliche Faserlängen, Fasermaterial, Faserdichte (z.B. Beabstandung der Fasern), oder dergleichen aufweisen.

Die Rutsche kann unter einem Winkel zwischen 15° bis 40° geneigt sein. In einigen Ausführungsformen kann die Rutsche unter einem Winkel zwischen 18° bis 28° geneigt sein. In einigen Ausführungsformen kann die Rutsche unter einem Winkel zwischen 22° und 25° geneigt sein. Die Rutsche kann zu einer Aufstellfläche der Endstelle geneigt sein, und/oder der Winkel relativ zu der Aufstellfläche der Endstelle definiert und/oder gemessen sein.

Es kann vorgesehen sein, dass die Rutsche unter einem konstanten Neigungswinkel verläuft, und/oder der Winkel der Rutsche entlang der gesamten Länge der Rutsche konstant sein kann. Alternativ kann die Rutsche verschiedenen Abschnitt unterschiedlicher Neigung aufweisen. In einigen Ausführungsformen kann die Rutsche z.B. stückweise linear verlaufen, wobei mindestens zwei der Abschnitte eine unterschiedliche Neigung haben können. In einigen Ausführungsformen kann mindestens ein Teil der Rutsche gekrümmt sein. Alternativ oder zusätzlich kann vorgesehen sein, dass die Neigung der Rutsche einstellbar sein kann. In einigen Ausführungsformen kann die Rutsche mehrere Bereiche aufweisen, deren Neigung einstellbar sein kann.

Die Neigung der Rutsche kann derart gewählt sein, dass das Transportgut nicht stecken bleibt. Es kann vorgesehen sein, dass die Rutsche derart geneigt ist, dass der Winkel größer als ein (z.B. textilabhängiger, ggf. lokaler) Haftreibungswinkel ist. Die Rutsche kann derart geneigt sein (ggf. in Abhängigkeit des Textils), dass die Geschwindigkeit und/oder Beschleunigung des Transportguts nicht größer als ein vorgegebener Schwellwert ist.

In einigen Ausführungsformen kann die Rutsche und/oder die Oberfläche aus einen Grundkörper aus einem Metall und/oder Stahl aufweisen, und das Textil auf dem Grundkörper angeordnet sein. Das Textil kann mit dem Grundkörper verbunden und/oder an diesem befestigt sein. In einigen anderen Ausführungsformen kann die Oberfläche dem Textil entsprechen, und/oder mit dem Textil identisch sein. In einigen Ausführungsformen kann die Oberfläche das Substrat und/oder das Grundmaterial aufweisen, in das die Fasern eingebracht sind.

Die Fasern kann aus Polypropylen bestehen oder Polypropylen aufweisen. Die Faser kann aus Polyethylen bestehen oder Polypropylen aufweisen. Die Faser kann aus Polyamid bestehen oder Polyamid aufweisen. In einigen Ausführungsformen kann der Anteil Polypropylen, Polyethylen und/oder Polyamid der Faser mindestens 10 % bis mindestens 45% betragen. In einigen Ausführungsformen kann die Faser einen Anteil von 50% Polypropylen und einen Anteil von 50% Polyethylen haben. Die Fasern sind nicht zwingend auf die vorstehenden Materialien beschränkt.

Die Faser kann ein Monofilament oder ein Multifilament sein oder aufweisen. Die Faser kann z.B. aus einem Monofilamentgarn oder einem Multifilamentgarn gebildet sein. Die Faser kann eine Kunststofffaser sein oder aufweisen. Die Faser kann in einigen Ausführungsformen eine Naturfaser sein oder aufweisen. In einigen Ausführungsformen kann die Faser z.B. Baumwolle, Hanf, Flachs, Gras, oder dergleichen aufweisen, oder daraus bestehen. In einigen Ausführungsformen kann die Faser eine Chemiefaser, z.B. eine Polymerfaser, sein oder aufweisen, und/oder ein synthetisches Polymer, z.B. Polyerster, Polyethylen, Polypropylen, Polyimid, Elastan, Polyamid, Aramid, Polyvinylcarbonat, Polyvinylalkohol oder dergleichen aufweisen oder daraus bestehen. In einigen Ausführungsformen kann die Faser einen anorganischen Stoff aufweisen und/oder daraus bestehen, z.B. Glas, Metall, Keramik oder dergleichen.

Das Substrat kann einen textilen Stoff aufweisen oder aus einem textilen Stoff bestehen. Das Substrat kann alternativ oder zusätzlich einen Kunststoff und/oder einen Schaumstoff aufweisen und/oder daraus bestehen. Das Substrat kann ein Vlies, ein Gewebe und/oder ein Gestrick sein oder aufweisen.

Die Fasern des Textils können in eine Transportrichtung der Rutsche ausgerichtet sein. Die Fasern können sich in die Transportrichtung der Rutsche erstrecken, und/oder unter einem spitzen Winkel zu der Transportrichtung der Rutsche ausgerichtet sein. Es kann vorgesehen sein, dass mindestens einige, oder alle, der Fasern in eine Transportrichtung der Rutsche, und/oder in einem spitzen Winkel dazu, ausgerichtet sein können. In einigen Ausführungsformen kann aber auch vorgesehen sein, dass mindestens einige, oder alle, der Fasern oder alle der Fasern entgegen der Transportrichtung der Rutsche, und/oder quer, und/oder unter einem Winkel, zur Transportrichtung der Rutsche, ausgerichtet sein können.

Die Fasern können eine Länge von 1 bis 40 mm haben. In einigen Ausführungsformen können die Fasern eine Länge von 2,5 bis 8 mm haben. In einigen Ausführungsformen können die Fasern eine Länge von 4 mm bis 7 mm haben. In einigen Ausführungsformen können die Fasern eine Länge von 5,2 mm bis 6 mm haben. Das Textil kann eine Höhe von 4 mm bis 10 mm haben. In einigen Ausführungsformen kann das Textil eine Höhe von 4,5 mm bis 9 mm haben. In einigen Ausführungsformen kann das Textil eine Höhe von 6,2 mm bis 8,2 mm haben.

Die Fasern des Textils können derart ausgeführt sein, dass wenn ein Transportgut auf dem Textil transportiert wird, eine Kante des Transportguts zwischen die Fasern eintauchbar sein kann und/oder das Transportgut einen Wellenkamm aus Fasern vor sich herschieben kann. Beispielsweise können die Fasern eine derartige Steifigkeit aufweisen, dass wenn ein Transportgut auf dem Textil transportiert wird, eine Kante des Transportguts zwischen die Fasern eintauchbar sein kann und/oder das Transportgut einen Wellenkamm aus Fasern vor sich herschieben kann. Alternativ oder zusätzlich können die Fasern beispielsweise eine derartige Länge haben und/oder derart zueinander beabstandet sein, dass wenn ein Transportgut auf dem Textil transportiert wird, eine Kante des Transportguts zwischen die Fasern eintauchbar sein kann und/oder das Transportgut einen Wellenkamm aus Fasern vor sich herschieben kann. Durch den Wellenkamm und/oder das Eintauchen kann die Geschwindigkeit des Transportguts weiter verringert sein oder werden.

Die Fasern können dazu eingerichtet sein, wenn ein Transportgut auf dem Textil transportiert wird, das Transportgut abzubremsen. In einigen Ausführungsformen können die Fasern dazu eingerichtet sein, ein oder das Transportgut auf eine Geschwindigkeit zwischen 0,01 m/s und 4,5 m/s abzubremsen. In einigen Ausführungsformen können die Fasern dazu eingerichtet sein, ein oder das Transportgut auf eine Geschwindigkeit zwischen 1,5 m/s und 4,5 m/s abzubremsen. In einigen Ausführungsformen können die Fasern dazu eingerichtet sein, ein oder das Transportgut auf eine Geschwindigkeit zwischen 2 m/s und 3,5 m/s abzubremsen.

Beispielsweise können leichtere Transportgüter ohne größere Reibkräfte über die Fasern rutschen, und schwere Transportgüter sich durch ihr Gewicht in die Fasern eindrücken, wodurch eine größere Auflagefläche durch flachliegende Fasern gebildet sein kann. Das Transportgut kann damit die Fasern während des Rutschvorgangs hinunterdrücken und besser abgebremst sein oder werden. Damit können z.B. Aufprallimpulse oder dergleichen reduziert sein oder werden.

Das Textil kann ein Flächengewicht von 1000 g/m² bis 2500 g/m² aufweisen. In einigen Ausführungsformen kann das Textil ein Flächengewicht von 1300 g/m² bis 1700 g/m² aufweisen. In einigen Ausführungsformen kann das Flächengewicht des Textils im Wesentlichen 1000 g/m² betragen. In einigen Ausführungsformen kann das Flächengewicht des Textils im Wesentlichen 1300 g/m² betragen. In einigen Ausführungsformen kann das Flächengewicht des Textils im Wesentlichen 1700 g/m² betragen.

Die Rutsche kann eine Länge von mindestens 1 m aufweisen. In einigen Ausführungsformen kann die Rutsche eine Länge von mindestens 2 m aufweisen. In einigen Ausführungsformen kann die Rutsche eine Länge von mindestens 2,5 m aufweisen. In einigen Ausführungsformen kann die Rutsche eine Länge von mindestens 3 m aufweisen. In einigen Ausführungsformen kann der Übergabebereich eine Länge von mindestens 0,5 m aufweisen. In einigen Ausführungsformen kann der Übergabebereich eine Länge von mindestens 1 m aufweisen. In einigen Ausführungsformen kann der Übergabebereich eine Länge von mindestens 1,5 m aufweisen.

Alternativ oder zusätzlich kann das das Textil eine Länge von mindestens 2 m aufweisen. In einigen Ausführungsformen kann das Textil eine Länge von mindestens 2,5 m aufweisen. In einigen Ausführungsformen kann das Textil eine Länge von mindestens 3 m aufweisen.

Es kann vorgesehen sein, dass die Endstelle einen gewichtsspezifischen Staudruck von 0,05 N/kg bis 1 N/kg aufweisen kann. In einigen Ausführungsformen kann ein oder der gewichtsspezifischen Staudruck der Endstelle zwischen 0,2 N/kg bis 0,8 N/kg betragen. In einigen Ausführungsformen kann der gewichtsspezifische Staudruck im Wesentlichen konstant und/oder im Wesentlichen unabhängig von dem Gesamtgewicht der gestauten Transportgüter sein. In einigen Ausführungsformen kann der gewichtsspezifische Staudruck mit dem Gesamtgewicht der gestauten Transportgüter zunehmen.

Der Übergabebereich kann unter einem Übergabewinkel geneigt sein. Der Übergabebereich kann gerade in die Rutsche übergehen. Alternativ oder zusätzlich kann der Übergabebereich eine Rollenbahn aufweisen. In einigen Ausführungsformen kann der Übergabewinkel dem Winkel der Rutsche entsprechen.

Ein weiterer Aspekt betrifft einen Sorter, aufweisend eine Zuführstelle zum Einschleusen oder Zuführen eines Transportguts, eine Endstelle nach einem der vorangegangenen Ansprüche zum Ausschleusen und/oder Speichern des Transportguts, und eine Transportvorrichtung mit mindestens einer Transporteinheit zum Transportieren des Transportguts von der Zuführstelle zur Endstelle.

Die Transporteinheit kann ein Lastaufnahmemittel eines Kippschalensorters, eines Quergurtsorters und/oder eines Fallklappensorters sein oder aufweisen.

Noch ein anderer Aspekt betrifft ein Verfahren zum Entnehmen oder Ausschleusen eines Transportguts mit einer Endstelle, wobei das Verfahren die folgenden Schritte aufweist:
- Übergeben eines Transportguts an eine Rutsche;
- Befördern des Transportguts mit der Rutsche zu einer Sammelstelle, wobei das Transportgut beim Befördern auf einer Oberfläche der Rutsche rutscht;
wobei beim Befördern des Transportguts mit der Rutsche (das Transportgut von einem Textil mit freistehenden Fasern abgebremst wird, wobei das Textil zumindest abschnittsweise auf der Oberfläche angeordnet ist und/oder Teil der Oberfläche ist.

Das Verfahren kann mit einer erfindungsgemäßen Endstelle und/oder einem erfindungsgemäßen Sorter durchgeführt sein oder werden. Eine erfindungsgemäße Endstelle und/oder ein erfindungsgemäßer Sorter kann dazu eingerichtet sein, das Verfahren durchzuführen.

Das Transportgut kann mit und/oder durch einen Übergabebereich an die Rutsche übergeben werden.

Die Erfindung wird anhand der nachfolgenden beispielhaften Figuren weiter erläutert. Dabei zeigt:
- Fig. 1: eine beispielhafte Ausführungsform einer erfindungsgemäßen Endstelle;
- Fig. 2: eine andere beispielhafte Ausführungsform einer erfindungsgemäßen Endstelle;
- Fig. 3: eine weitere beispielhafte Ausführungsform einer erfindungsgemäßen Endstelle;
- Fig. 4: noch eine weitere beispielhafte Ausführungsform einer erfindungsgemäßen Endstelle;
- Fig. 5: eine Detailansicht eines Textils;
- Fig. 6: Ausschnitte beispielhafter Rutschen;
- Fig. 7: ein Ausführungsbeispiel eines erfindungsgemäßen Sorters.

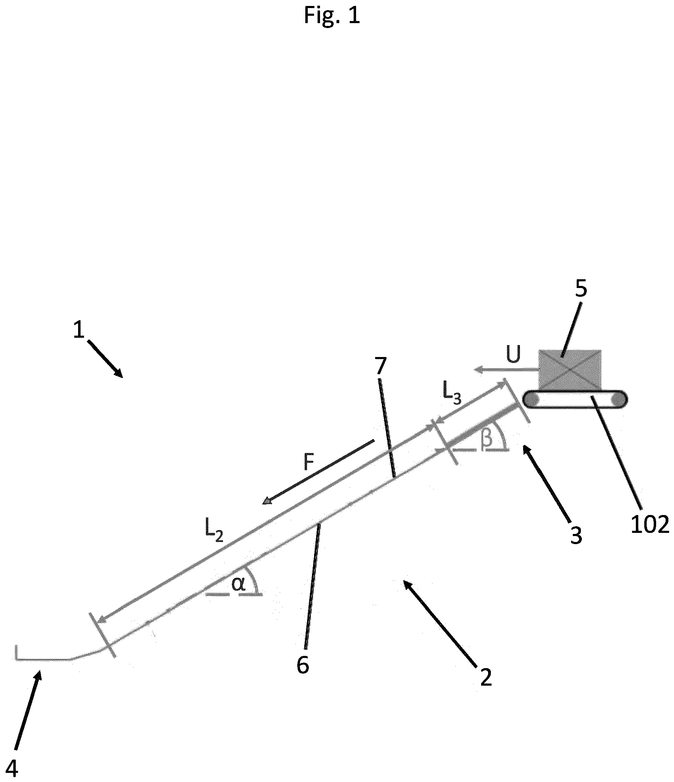

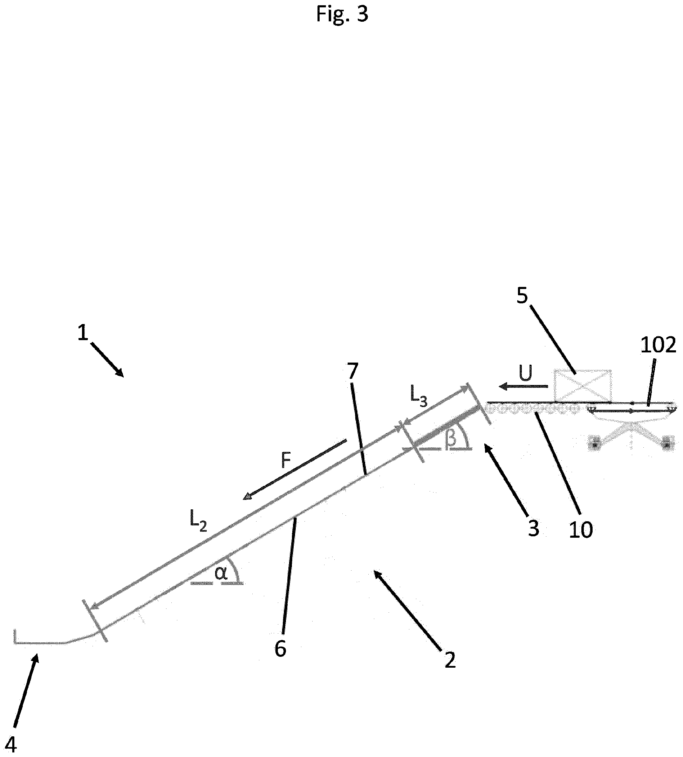

Die Figuren 1 bis 4 zeigen beispielhafte Ausführungsformen jeweils erfindungsgemäßer Endstellen 1. Die Endstelle 1 weist eine Rutsche 2 und einen Sammelbereich 4 auf. Die Rutsche 2 ist dazu eingerichtet, Transportgut 5 zu dem Sammelbereich 4 zu befördern. Ein an die Sammelstelle 4 befördertes Transportgut 5 kann aus der Sammelstelle 4 entnommen werden.

Die Endstelle 1 kann einen Übergabebereich 3 aufweisen. Die Rutsche 2 kann zwischen dem Übergabebereich 3 und dem Sammelbereich 4 angeordnet sein. Die Rutsche 2 kann dazu eingerichtet sein, ein an den Übergabebereich 3 übergebenes Transportgut 5 zu dem Sammelbereich 4 zu befördern. Der Übergabebereich 3 kann über dem Sammelbereich 4 angeordnet sein. Die Rutsche 2 kann den Übergabebereich 3 und den Sammelbereich 4 verbinden. Die Rutsche 2 weist eine Oberfläche 6 auf, entlang der ein Transportgut 5 zu dem Sammelbereich 4 rutschen kann. Die Rutsche 2 kann eine Oberfläche 6 aufweisen, entlang der ein Transportgut 5 von dem Übergabebereich 3 zu dem Sammelbereich 4 rutschen kann. Die Oberfläche 6 weist ein Textil 7 auf. Alternativ oder zusätzlich kann die Oberfläche 6 das Textil 7 sein oder diesem entsprechen. Das Textil 7 weist freistehende Fasern auf.

Das Transportgut 5 kann beispielsweise ein Paket, ein Päckchen, eine Verpackung, eine Kartonage, eine Postwurfsendung, ein Beutel, ein Brief und/oder dergleichen sein oder aufweisen.

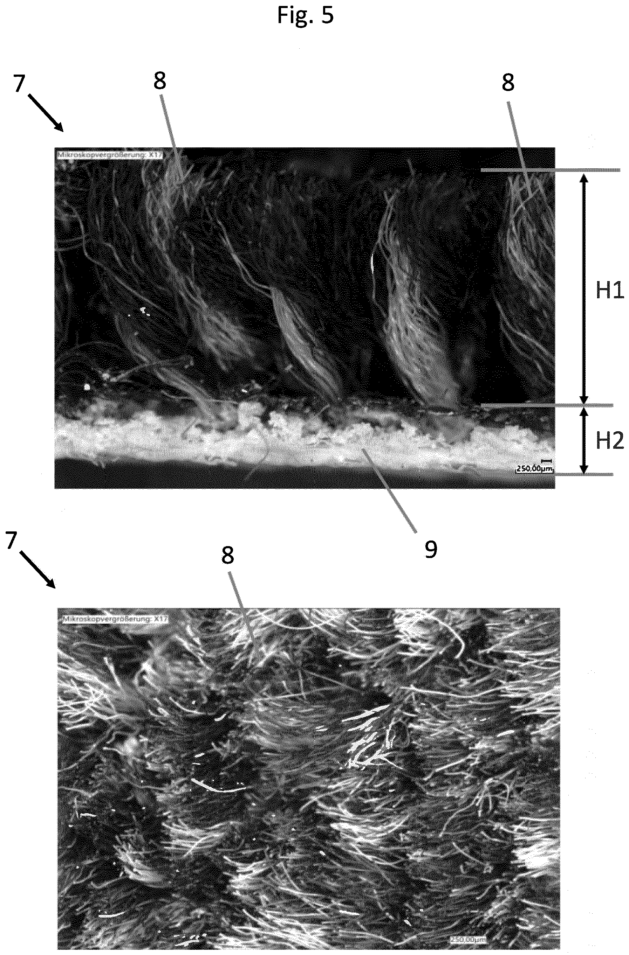

Ein beispielhaftes Textil 7 ist in Figur 5 gezeigt und mit Bezug zu Figur 5 beschrieben.

In einigen Ausführungsformen kann das Textil 7 ein Schnittflorteppich sein oder aufweisen. Alternativ oder zusätzlich kann das Textil 7 ein Schnittvelour sein oder aufweisen.

Die Rutsche 2 kann unter einem Winkel α geneigt sein. Der Rutschenwinkel α kann relativ zu einer Aufstellfläche der Rutsche 2 und/oder der Endstelle 1 definiert und/oder gemessen sein oder werden. Der Winkel α kann ein spitzer Winkel sein. In einigen Ausführungsformen kann der Winkel α zwischen 15° bis 40° betragen. In einigen Ausführungsformen kann der Winkel α zwischen 15° bis 32° betragen. In einigen Ausführungsformen kann der Winkel α zwischen 18° bis 28° betragen. In einigen Ausführungsformen kann der Winkel α zwischen 22° und 25° betragen.

Es kann vorgesehen sein, dass die Rutsche 2 im Wesentlichen gerade verläuft, und/oder deren Steigung konstant sein kann. In einigen Ausführungsform (nicht in den Figuren gezeigt) kann die Rutsche 2 einen stückweise linearen Verlauf aufweisen. Beispielsweise kann die Rutsche 2 mehrere Abschnitte haben (nicht in den Figuren gezeigt), von den mindestens zwei unter verschiedenen Winkeln geneigt sein können und/oder eine unterschiedliche Steigung haben können. In einigen Ausführungsformen kann vorgesehen sein, dass die Steigung und/oder Neigung der Rutsche 2 zumindest abschnittsweise geändert und/oder eingestellt sein oder werden kann.

Es kann vorgesehen sein, dass das Textil 7 zumindest abschnittsweise entlang der Rutsche 2 und/oder der Oberfläche 6 angeordnet sein kann, und/oder die Rutsche 2 und/oder die Oberfläche 6 zumindest abschnittsweise das Textil 7 aufweisen kann. In einigen Ausführungsformen kann die Rutsche 2 und/oder die Oberfläche 6 mehr als ein Textil 7 aufweisen, wobei mindestens zwei der Textile 7 voneinander verschieden sein und/oder unterschiedliche Eigenschaften haben können. In einigen Ausführungsformen kann vorgesehen sein, dass das Textil 7 eines Abschnitts ein Transportgut stärker oder schwächer verlangsamen kann als ein Textil 7 eines anderen Abschnitts der Rutsche 2. In einigen Ausführungsformen kann vorgesehen sein, dass an oder in mindestens einem Abschnitt der Rutsche 2 kein Textil 7 vorgesehen, oder angeordnet ist, und/oder vorliegt.

In einigen Ausführungsformen kann in mindestens einem Abschnitt der Rutsche 2 eine Rollenbahn und/oder Rollen angeordnet sein (nicht in den Figuren gezeigt).

Die Rutsche 2 kann eine Länge L2 von mindestens 1 m aufweisen. Die Rutsche 2 kann eine Länge L2 von mindestens 2 m aufweisen. In einigen Ausführungsformen kann die Rutsche 2 eine Länge L2 von mindestens 2,5 m aufweisen. In einigen Ausführungsformen kann die Rutsche 2 eine Länge L2 von mindestens 3 m aufweisen. Die Länge L2 kann beispielsweise entlang der Oberfläche 6 und/oder dem Textil 7 definiert sein. In einigen Ausführungsformen kann die Länge L2 im Wesentlichen 4,5 m betragen.

Es kann vorgesehen sein, dass die Rutsche 2 glatt in den Übergabebereich 3 übergehen kann, z.B. an einem oberen Ende der Rutsche 2. Es kann vorgesehen sein, dass die Rutsche 2 glatt in den Sammelbereich 4 übergehen kann, z.B. an einem unteren Ende der Rutsche 2. Mit "glatt übergehen" kann gemeint sein, dass an der Übergangsstelle die Rutsche 2 und der Übergabebereich 3, und/oder die Rutsche 2 und der Sammelbereich 4, lokal dieselbe Steigung haben und/oder kein Versatz zwischen Rutsche 2 und Übergabebereich 3, und/oder Rutsche 2 und Sammelbereich 4, vorliegt.

An, bei oder mit dem Übergabebereich 3 kann ein Transportgut 5 an oder in die Endstelle 1 übergeben sein oder werden. Das Transportgut 5 kann von dem Übergabebereich 3 an die Rutsche 2 und/oder zu der Rutsche 2 befördert sein oder werden. In einigen Ausführungsformen kann der Übergabebereich 3 einen geraden Abschnitt aufweisen, und/oder gerade verlaufen. Beispielsweise kann der Übergabebereich 3 unter einem Winkel β zumindest abschnittsweise geneigt sein. Der Übergabebereichswinkel β kann in einigen Ausführungsformen im Wesentlichen dem Winkel α der Rutsche 2 entsprechen, und/oder einen gleichen oder zumindest ähnlichen Wert aufweisen. In einigen Ausführungsformen kann der Übergabebereichswinkel β aber auch von dem Rutschenwinkel α verschieden sein, z.B. kleiner oder größer. Der Winkel β des Übergabebereich 3 kann ein spitzer Winkel sein. In einigen Ausführungsformen kann der Winkel β zwischen 15° bis 40° betragen. Der Winkel β des Übergabebereich 3 kann ein spitzer Winkel sein. In einigen Ausführungsformen kann der Winkel β zwischen 15° bis 32° betragen. In einigen Ausführungsformen kann der Winkel β zwischen 18° bis 28° betragen. In einigen Ausführungsformen kann der Winkel β zwischen 22° und 25° betragen. Der Übergabebereichswinkel β kann relativ zu einer Aufstellfläche der Rutsche 2 und/oder der Endstelle 1 definiert und/oder gemessen sein oder werden.

Der Übergabebereich 3 kann eine Rollenbahn 10 aufweisen. Die Rollenbahn 10 kann Transportgut 5 von der Transporteinheit 102 zu der Rutsche 2, und/oder einem der Rutsche 2 zugeordneten Abschnitt des Übergabebereich 3 transportieren. Alternativ oder zusätzlich kann der Übergabebereich 3 eine Umstellklappe aufweisen. In einigen Ausführungsformen kann der Übergabebereich 3 eine Weiche, ein Umschalteinheit oder dergleichen aufweisen, mit der ein Transportgut 5 beispielsweise gezielt und/oder kontrolliert an eine von mehreren Rutschen 2 übergeben werden kann. In einigen Ausführungsformen kann der Übergabebereich 3 dazu eingerichtet sein, eine oder die Übergaberichtung U variabel zu wählen und/oder ein Transportgut 5 in verschiedene Übergaberichtungen U zu übergeben. In einigen Ausführungsformen können mehrere Rutschen 2 vorgesehen sein. Es kann vorgesehen sein, dass jeder der Rutschen 2 ein separater und/oder vorgegebener Sammelbereich 4 zugeordnet sein kann. Jede der Rutschen 2 kann eine entsprechende Übergaberichtung U haben. Der Übergabebereich 3 kann dazu eingerichtet sein, ein Transportgut 5 an eine vorgegebene oder vorbestimmte Rutsche 2 in einer entsprechenden Übergaberichtung U zu übergeben, und/oder kann dazu eingerichtet sein, zwischen verschiedenen Übergaberichtungen U zu wechseln.

Der Übergabebereich kann in einigen Ausführungsformen eine Länge L3 von mindestens 0,5 m haben. Der Übergabebereich kann in einigen Ausführungsformen eine Länge L3 von mindestens 1 m haben. In einigen Ausführungsformen kann die Länge L3 mindestens 1,2 m betragen, oder im Wesentlichen 1,3 m entsprechen.

Das Transportgut 5 kann von einer Transporteinheit 102 an den Übergabebereich 3 übergeben werden. Das Transportgut 5 kann in eine Übergaberichtung U dem Übergabebereich 3 zugeführt sein oder werden. In einigen Ausführungsformen kann das Transportgut 3 mit einer Geschwindigkeit von im Wesentlichen 2,5 m/s, und/oder einer Beschleunigung von im Wesentlichen 3 m/s², in Übergaberichtung U übergeben sein oder werden. In einigen Ausführungsformen kann die Transporteinheit 102 eine Geschwindigkeit von im Wesentlichen 2,5 m/s bei der Übergabe des Transportguts 5 haben.

Die Transporteinheit 102 kann beispielsweise ein Lastaufnahmemittel eines Quergurtsorters oder dergleichen sein oder aufweisen, vgl. z.B. Fig. 1. Die Transporteinheit 102 kann beispielsweise einen Quergurt aufweisen, auf dem das Transportgut 5 transportiert sein oder werden kann. Der Quergurt kann derart gesteuert und/oder verfahren sein oder werden, dass ein von der Transporteinheit 102 transportiertes Transportgut 5 an den Übergabebereich 3 übergeben sein oder werden kann.

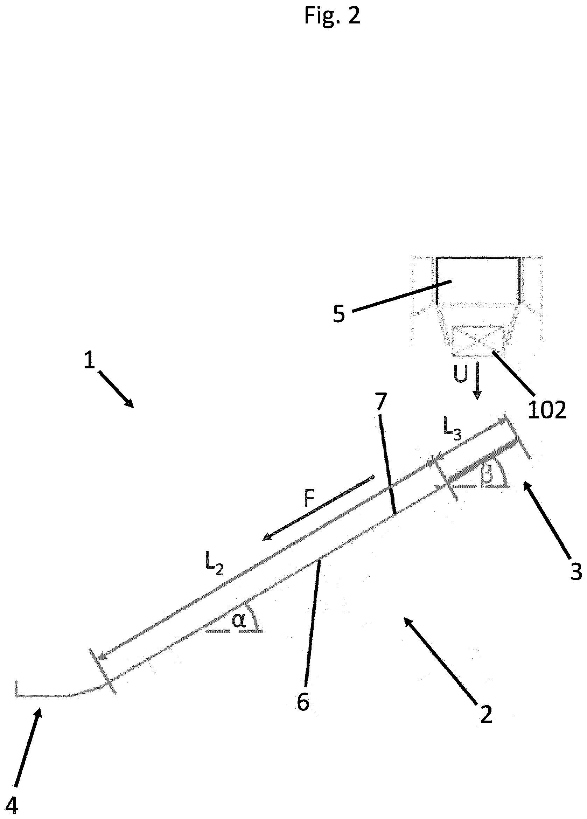

Alternativ oder zusätzlich kann die Transporteinheit 102 beispielsweise ein Lastaufnahmemittel eines Fallklappensorters oder dergleichen sein oder aufweisen, vgl. z.B. Fig. 2. Die Transporteinheit 102 kann beispielsweise das Transportgut 5 halten und/oder stützen. Das Transportgut 5 kann unter freiem Fall in den Übergabebereich 3 befördert und/oder übergeben sein oder werden.

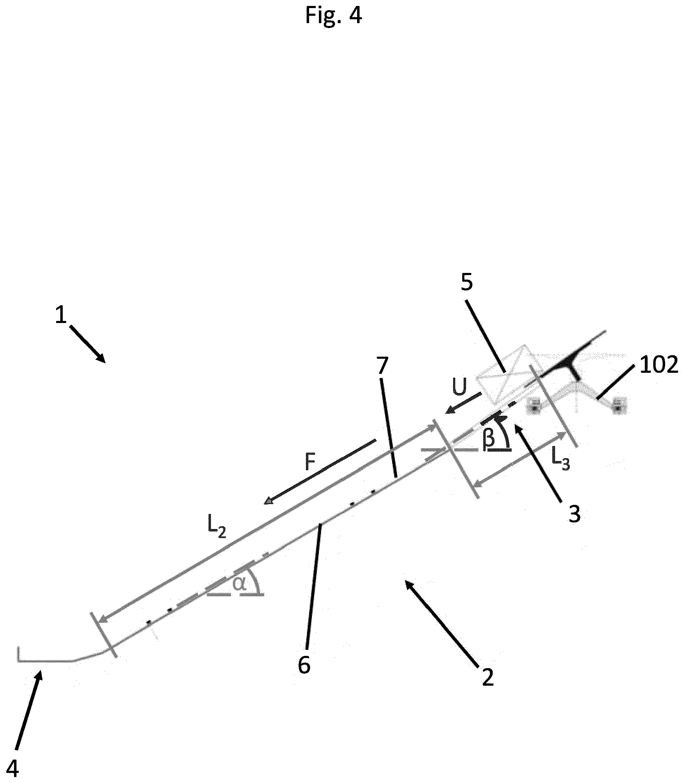

Alternativ oder zusätzlich kann die Transporteinheit 102 beispielsweise ein Lastaufnahmemittel eines Kippschalensorters oder dergleichen sein oder aufweisen, vgl. z.B. Fig. 4. Die Transporteinheit 102 kann beispielsweise eine Kippschale aufweisen, auf der das Transportgut 5 transportiert sein oder werden kann. Die Kippschale kann derart gesteuert und/oder verschwenkt sein oder werden, dass ein von der Transporteinheit 102 transportiertes Transportgut 5 an den Übergabebereich 3 übergeben sein oder werden kann.

In einigen Ausführungsformen kann vorgesehen sein, dass der Übergabebereich 3 ein Teil der Rutsche 2 sein kann. In anderen Worten kann der Übergabebereich 3 in einigen Ausführungsformen derjenige Teil der Rutsche 2 sein, an oder zu dem das Transportgut 5 von der Transporteinheit 102 übergeben sein oder werden kann. Es kann vorgesehen sein, dass die Rutsche 2 den Übergabebereich 3 aufweisen kann. Alternativ kann in einigen Ausführungsformen der Übergabebereich 3 ein von der Rutsche 2 separater und/oder eigenständiger Teil der Endstelle 1 sein. In einigen Ausführungsformen kann der Übergabebereich 3 und die Rutsche 2 einstückig ausgeführt sein.

In dem Sammelbereich 4 kann Transportgut 5 gesammelt und/oder gelagert sein oder werden. Das Transportgut 5 kann aus dem Sammelbereich 4 entnommen werden. Der Sammelbereich 4 kann beispielsweise einen Anschlag oder eine Begrenzung aufweisen, um von der Rutsche 2 transportiertes Transportgut 5 zu stoppen und/oder zurückzuhalten. In einigen Ausführungsformen kann der Sammelbereich 4 einen Behälter und/oder Container aufweisen, in dem Transportgut 5 aufgenommen sein oder werden kann.

Figur 5 zeigt ein beispielhaftes Textil 7. Die obige Abbildung der Figur 5 zeigt einen Querschnitt, die untere Abbildung eine Draufsicht.

Das Textil 7 hat freistehenden Fasern 8. Das Textil 7 kann getuftet sein. Das Textil 7 kann ein Schnittflorteppich und/oder ein Schnittvelour sein oder aufweisen. Das Textil 7 kann ein Substrat 9 aufweisen.

Die Faser 8 kann ein Monofilament oder ein Multifilament sein oder aufweisen. Die Faser kann z.B. aus einem Monofilamentgarn oder einem Multifilamentgarn gebildet sein. Die Faser 8 kann eine Kunststofffaser sein oder aufweisen. Die Faser 8 kann in einigen Ausführungsformen eine Naturfaser sein oder aufweisen.

Die Faser 8 kann durch Nadeln in das Substrat 9 eingenadelt sein, und/oder in das Substrat 9 eingenäht sein. Das Substrat 9 kann ein Vliesstoff, ein Gewebe und/oder ein Gestrick aufweisen. Es sind aber auch andere Substrate 9 möglich.

Beim Tuften kann zunächst eine Oberfläche des Textils 7 aus vielen kleinen Schlingen gebildet werden, die durch das Substrat 9 genadelt und/oder eingenäht sein oder werden können. Um diese Schlingen herzustellen, kann eine Nadel mit einem Garn Substrat 9 fahren. An der anderen Seite kann das Garn durch einen Greifer festgehalten werden, und die Nadel wieder zurückfahren. Anschließend können die Schlingen, die durch das Tuften entstanden sind, durchgeschnitten werden, um die freistehende Faser 8 zu bilden. Dies kann bei oder nach dem Greifer erfolgen, sodass z.B. gleichzeitig die genadelte (und/oder genähte) Faser 8 festgehalten und anschließend geschnitten werden kann.

Die Fasern 8 des Textils 7 können in einigen Ausführungsformen vollständig aus Polypropylen bestehen, und/oder einen Anteil von 100 % Polypropylen aufweisen. Die Fasern 8 des Textils 7 können in einigen Ausführungsformen vollständig aus Polyethylen bestehen, und/oder einen Anteil von 100 % Polyethylen aufweisen. Die Fasern 8 des Textils 7 können in einigen Ausführungsformen vollständig aus Polyamid bestehen, und/oder einen Anteil von 100 % Polyamid aufweisen.

In einigen Ausführungsformen kann der Anteil Polypropylen der Fasern 8 mindestens 10 % bis 50 % betragen. In einigen Ausführungsformen kann der Anteil Polyethylen der Fasern 8 mindestens 10 % bis 50 % betragen. In einigen Ausführungsformen kann der Anteil Polyamid der Fasern 8 mindestens 10 % bis 50 % betragen. In einer Ausführungsformen können beispielsweise die Fasern 8 einen Anteil Polyethylen von 50 % und einen Anteil Polypropylen von 50 % aufweisen.

Das Textil 7 kann ein Flächengewicht von 1000 g/m² bis 2500 g/m² aufweisen. In einigen Ausführungsformen kann das Textil 7 ein Flächengewicht von 1300 g/m² bis 1700 g/m² aufweisen. In einigen Ausführungsformen kann das Flächengewicht des Textils 7 im Wesentlichen 1000 g/m² betragen. In einigen Ausführungsformen kann das Flächengewicht des Textils 7 im Wesentlichen 1300 g/m² betragen. In einigen Ausführungsformen kann das Flächengewicht des Textils 7 im Wesentlichen 1700 g/m² betragen.

Die Fasern 8 können mit dem Substrat 9 verbunden sein, und/oder von dem Substrat 9 abstehen. Die Fasern 8 können eine Länge L1 von 5 mm bis 7 mm haben. In einigen Ausführungsformen kann die Faserlänge L1 im Wesentlichen 6 mm betragen.

Die Faser 8 kann eine unbelastete Höhe H1 von im Wesentlichen 2,5 mm bis 8 mm haben. In einigen Ausführungsformen kann die Höhe H1 im Wesentlichen 4 mm bis 7 mm betragen. In einigen Ausführungsformen kann die Höhe H1 im Wesentlichen 5,2 mm bis 6,6 mm betragen. Die unbelastete Höhe H1 kann in einigen Ausführungsformen im Wesentlichen der Länge L1 der Fasern 8 entsprechen. Die unbelastete Höhe H1 kann eine Höhe sein, die die Faser 8 in einem unbelasteten Zustand aufweisen kann. Mit "unbelastetem Zustand" kann gemeint sein, dass keine Kraft auf das Textil 7 wirkt, und/oder dass kein Transportgut 5 auf dem Textil 7 aufliegt und/oder rutscht.

Das Substrat 9 kann eine Höhe H2 von im Wesentlichen 0,5 mm bis 2,5 mm haben. In einigen Ausführungsformen kann das Substrat 9 eine Höhe H2 von im Wesentlichen 1 mm bis 2 mm haben.

Eine oder die Höhe des Textils 7 kann der Summe der Höhe der Faser, z.B. H1, und der Höhe des Substrats H2, entsprechen.

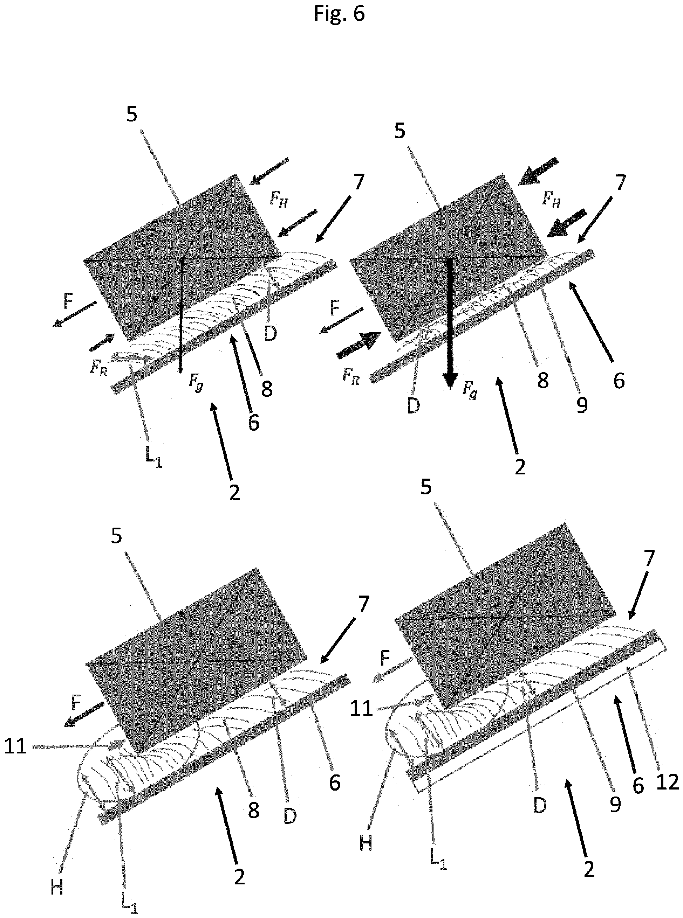

Figur 6 zeigt Ausschnitte beispielhafter Rutschen 2, wobei ein Transportgut 5 entlang der Rutsche 2 in eine Transportrichtung F bewegt sein oder werden kann. Das Transportgut 5 kann aufgrund einer Hangabtriebskraft F_{H} entlang der Oberfläche 6 und/oder dem Textil 7 der Rutsche 2 rutschen. Die Hangabtriebskraft F_{H} kann sich aufgrund der Gewichtskraft F_{G} des Transportguts 5 ergeben, und von dem Winkel bzw. der Neigung der Rutsche 2 abhängig sein. Der Bewegung des Transportguts 5 in Transportrichtung F kann eine Reibkraft F_{R} entgegenwirken. Aufgrund der Reibkraft F_{R} kann das Transportgut 5 abgebremst, und/oder zumindest weniger stark beschleunigt sein oder werden.

Die Reibkraft F_{R} kann durch das Textil 7 und/oder die Fasern 8 hervorgerufen und/oder beeinflusst sein oder werden. Das Textil 7 und/oder die Fasern 8 kann das Transportgut 5 abbremsen, und/oder zumindest dessen Beschleunigung reduzieren. Das Textil 7 und/oder die Fasern 8 kann damit die Geschwindigkeit des Transportguts 5 verringern, insbesondere beim Transport des Transportguts 5 von dem Übergabebereich 3 zu dem Sammelbereich 4. Das Transportgut 5 kann, verglichen mit einer Endstelle ohne erfindungsgemäßen Textil 7, reduzierten Geschwindigkeit in den Sammelbereich 4 geführt und/oder transportiert sein oder werden. Damit können Beschädigungen des Transportguts 5 vermieden oder zumindest reduziert sein oder werden.

Wie beispielsweise aus den unteren beiden Abbildungen der Figur 6 ersichtlich, kann eine Kante des Transportguts 5 in die Fasern 8 und/oder zwischen die Fasern 8, eintauchen. Beispielsweise kann das Transportgut 5 bei einer Bewegung in Transportrichtung F entlang der Oberfläche 6 bzw. der Rutsche 2 die Fasern 8 wellenkammartig vor sich herschieben. Damit kann sich eine Verringerung der Beschleunigung und/oder Geschwindigkeit des Transportguts 5 ergeben.

Die Fasern 8 können derart beabstandet sein und/oder eine derartige Länge L1 haben, dass eine Kante des Transportguts 5 zwischen die Fasern 8 eintauchen kann, und/oder ein entsprechender Wellenkamm 11 sich beim Transport des Transportguts 5 ergeben kann. Die Fasern 8 können alternativ oder zusätzlich eine derartige Steifigkeit aufweisen, dass sich beim Transport des Transportguts 5 ein Wellenkamm 11 ergeben kann. Durch den Wellenkamm 11 und/oder das Eintauchen kann die Geschwindigkeit des Transportguts 5 weiter verringert sein oder werden.

Wie beispielsweise aus den Abbildungen der Figur 6 ersichtlich, kann das Textil 7 aufgrund des Gewichts des Transportguts 5 zusammengestaucht sein oder werden, d. h. eine verringerte Höhe D verglichen mit dem unbelasteten Zustand haben. Beispielsweise können leichtere Transportgüter 5 ohne größere Reibkräfte über die Fasern 8 rutschen, und schwere Transportgüter 5 sich durch ihr Gewicht in die Fasern 8 eindrücken, wodurch eine größere Auflagefläche durch flachliegende Fasern 8 gebildet sein kann. Das Transportgut 5 kann damit die Fasern 8 während des Rutschvorgangs hinunterdrücken und besser abgebremst sein oder werden. Damit können z.B. Aufprallimpulse oder dergleichen reduziert sein oder werden.

Dadurch, dass die Fasern 8 freistehend sind, insbesondere z.B. keine Schlingen aufweisen, kann insbesondere ein Verhaken des Oberflächenmaterials (z.B. durch Aufrauhungen, aufgrund Fasern von Kartons, oder dergleichen) in den Fasern verhindert sein, so dass sich ein gleichmäßiges und/oder glattes Rutschen ergeben kann. Beispielsweise kann damit ein "ruckeln" oder ein ruckartiges Rutschverhalten des Transportguts 5 in Förderrichtung F verhindert und/oder zumindest verringert sein.

Es kann vorgesehen sein, dass die Fasern 8, wie beispielhaft in Figur 6 gezeigt, in Transportrichtung F ausgerichtet sein können. Dadurch kann sich ein vorteilhaftes und gleichmäßigeres Rutschen und/oder Abbremsen ergeben.

Ein Staudruck kann derjenigen Kraft entsprechen, die bei einer Aufreihung bzw. Aufstapelung von Transportgütern 5 auf der das unterste Transportgut 5 stützende Fläche mindestens entgegengebracht werden muss, damit die Transportgüter nicht herunterrutschen. Der Staudruck kann damit auch derjenigen Kraft entsprechen, die im Betriebsalltag auf das erste Transportgut 5 in dem Sammelbereich 4 einwirkt, wenn sich Transportgüter 5 in der Endstelle 1 aufstauen.

In einigen Ausführungsbeispielen kann der gewichtsspezifische Staudruck im Wesentlichen konstant und/oder unabhängig von dem Gesamtgewicht sein. In einigen Ausführungsformen kann der der gewichtsspezifische Staudruck mit zunehmendem Gesamtgewicht zunehmen. Der gewichtsspezifische Staudruck kann dem auf das Gewicht des Transportguts bezogenen Staudruck entsprechen.

In einigen Ausführungsformen kann der Staudruck für größere Faserlängen (und/oder unbelasteter Faserhöhe) geringer sein als bei kleineren Faserlängen (und/oder unbelasteter Faserhöhe).

Erfindungsgemäße Endstellen 1 ermöglichen eine verglichen mit bekannten Rutschen ohne Textil bzw. bekannten Endstellen einen verringerten Staudruck. Damit können Beschädigungen aufgestauter Transportgüter 5 vermieden, oder zumindest reduziert sein oder werden.

Die erfindungsgemäßen Endstellen 1 ermöglichen eine verglichen mit bekannten Rutschen ohne Textil bzw. bekannten Endstellen eine reduzierte Geschwindigkeit.

Durch die verringerte Geschwindigkeit kann sich insbesondere ein verringerter Aufprallimpuls ergeben, so dass Beschädigungen der Transportgüter 5 verhindert oder zumindest reduziert sein oder werden können.

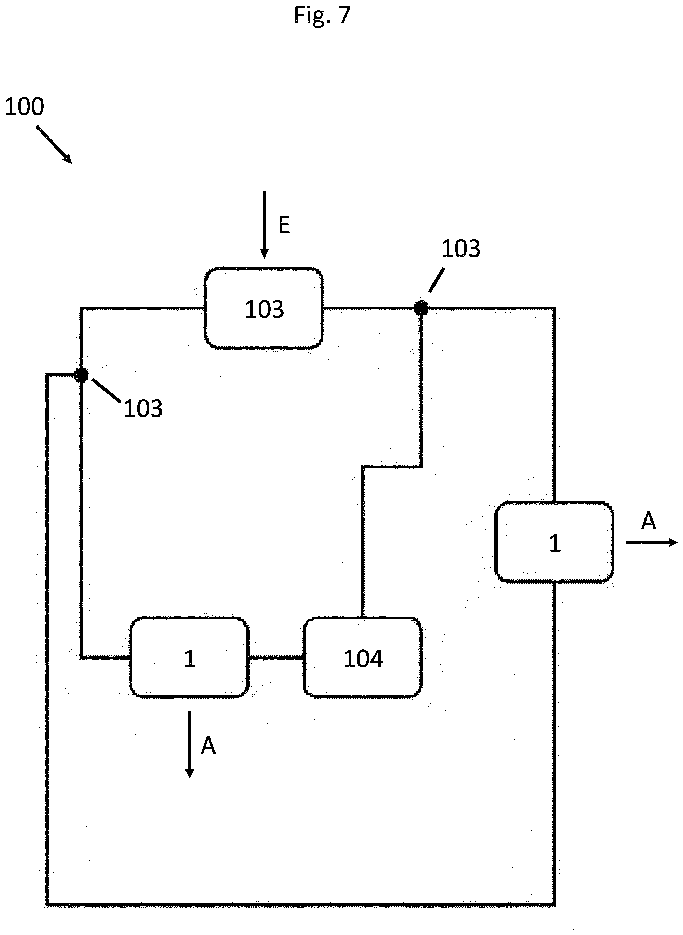

Figur 7 zeigt ein Ausführungsbeispiel einer erfindungsgemäßen Sorters 100. Der Sorter 100 weist eine Zuführstelle 101, Endstelle 1 und eine Transportvorrichtung 105 auf. Die Transportvorrichtung 105 ist dazu eingerichtet, Transportgut 5 von der Zuführstelle 101 zu der Endstelle 1 zu transportieren. Transportgut 5 kann an der Zuführstelle 103 in den Sorter 100 eingeschleust sein oder werden, wie durch den Pfeil E angedeutet. Das Transportgut 5 kann an der Endstelle 1 eingeschleust sein oder werden, wie durch den Pfeil A angedeutet. Der Sorter 100 kann mindestens eine oder mehrere Endstellen 1 aufweisen.

Der Sorter 100 kann ein Quergurtsorter, ein Kippschalensorter, einen Fallklappensorter, ein Taschensorter, ein Hängeförderer und/oder ein Schwerkraftförderer sein oder aufweisen. Der Sorter 100 weist mindestens eine Transporteinheit 102 auf. Die Transporteinheit 102 kann ein entsprechendes Lastaufnahmemittel des Sorters 100 sein oder aufweisen.

Die Transporteinheit 102 kann dazu eingerichtet sein, Transportgut 5 an, bei oder in der Zuführstelle 103 aufzunehmen. Die Transporteinheit 102 kann dazu eingerichtet sein, Transportgut 5 an, bei oder in der Endstelle 1 abzugeben und/oder zu übergeben.

Der Sorter 100 kann eine oder mehrere Weichen 103 oder dergleichen aufweisen.

In einigen Ausführungsformen kann vorgesehen sein, dass der Sorter 100 mindestens eine oder mehrere Stationen 104 aufweisen kann. Eine Station 104 kann beispielsweise ein Puffer, eine Pufferstrecke, eine Service- oder Wartungsstation für die Transporteinheit 102, eine Inspektionsstation zur Überprüfung des Transportguts 5, oder dergleichen sein oder aufweisen.

Ein Erfindungsgemäßes Verfahren zum Entnehmen oder Ausschleusen eines Transportguts mit einer Endstelle weist die folgenden Schritte auf: Übergeben eines Transportguts (5) an eine Rutsche (2); Befördern des Transportguts (5) mit der Rutsche (2) zu einer Sammelstelle (4), wobei das Transportgut (5) beim Befördern auf einer Oberfläche der Rutsche (2) rutscht; wobei beim Befördern des Transportguts (5) mit der Rutsche (2) das Transportgut (5) von einem Textil (7) mit freistehenden Fasern (8), das zumindest abschnittsweise auf der Oberfläche (6) angeordnet ist und/oder Teil der Oberfläche (6) ist, abgebremst wird.

Das Verfahren kann mit einer erfindungsgemäßen Endstelle (1) und/oder einem erfindungsgemäßen Sorter (100) durchgeführt sein oder werden. Eine erfindungsgemäße Endstelle (1) und/oder ein erfindungsgemäßer Sorter (100) können ein oder das Verfahren durchführen.

Ein bei oder zu der Durchführung verwendete Endstelle (1) kann eines, mehrere oder alle Merkmale und/oder Vorteile der vorstehend beschriebenen und/oder in den Figuren gezeigten Endstellen (1) aufweisen. Ein bei oder zu der Durchführung verwendeter Sorter (100) kann eines, mehrere oder alle Merkmale und/oder Vorteile der vorstehend beschriebenen und/oder in den Figuren gezeigten Sorter (100) aufweisen.

Das Transportgut (5) kann mit und/oder durch einen Übergabebereich (3) an die Rutsche (2) übergeben werden.

Die in den Ansprüchen, der Beschreibung und den Figuren offenbarten Merkmale können einzeln oder in beliebiger Kombination für die Verwirklichung der Erfindung wesentlich sein.

### Bezugszeichenliste:

- 1: Endstelle
- 2: Rutsche
- 3: Übergabebereich
- 4: Sammelbereich
- 5: Transportgut
- 6: Oberfläche
- 7: Textil
- 8: Faser
- 9: Substrat
- 10: Rollenbahn
- 11: Wellenkamm
- 12: Grundkörper

- 100: Sorter
- 101: Zuführstelle
- 102: Transporteinheit
- 103: Weiche
- 104: Station
- 105: Transportvorrichtung

- α: Rutschenwinkel
- β: Übergabebereichswinkel
- H1: unbelastete Faserhöhe
- H2: Höhe Substrat
- D: belastete Faserhöhe
- L1: Faserlänge
- L2: Rutschenlänge
- L3: Übergabebereichslänge
- F: Transportrichtung
- F_{R}: Reibkraft
- F_{G}: Gewichtskraft
- F_{H}: Hangabtriebskraft
- U: Übergaberichtung
- E: Einschleusung
- A: Ausschleusung

## Patentansprüche

1. Endstelle (1) für einen Sorter (100), aufweisend eine Rutsche (2) und einen Sammelbereich (4) zur Entnahme eines Transportguts (5) aus der Endstelle (1), wobei die Rutsche (2) dazu eingerichtet ist, das Transportgut (5) zu dem Sammelbereich (4) zu befördern, wobei, wenn das Transportgut (5) von der Rutsche (2) befördert ist, das Transportgut (5) auf einer Oberfläche (6) der Rutsche (2) rutscht, **dadurch gekennzeichnet, dass** die Oberfläche (6) zumindest abschnittsweise ein Textil (7) mit freistehenden Fasern (8) ist oder aufweist.

2. Endstelle (1) nach Anspruch 1, die einen Übergabebereich (3) zur Übergabe des Transportguts (5) aufweist, wobei die Rutsche (2) zwischen Übergabebereich (3) und Sammelbereich (4) angeordnet ist.

3. Endstelle (1) nach Anspruch 1 oder 2, bei der das Textil (7) ein Schnittflorteppich und/oder ein Schnittvelour ist oder aufweist.

4. Endstelle (1) nach einem der vorangegangenen Ansprüche, bei der das Textil (7) und/oder die Oberfläche (6) getuftet ist.

5. Endstelle (1) nach einem der vorangegangenen Ansprüche, bei der das Textil (7) die Oberfläche (6) vollständig bedeckt und/oder entlang der gesamten Länge und/oder Breite der Rutsche (2) angeordnet ist.

6. Endstelle (1) nach einem der vorangegangenen Ansprüche, bei der die Rutsche (2) unter einem Winkel (α) zwischen 15° bis 40°, bevorzugt zwischen 18° bis 28°, besonders bevorzugt zwischen 22° und 25°, zu einer Aufstellfläche der Endstelle (1) geneigt ist.

7. Endstelle (1) nach einem der vorangegangenen Ansprüche, bei der die Fasern (8) aus einer Naturfaser und/oder einer Chemiefaser bestehen, und/oder eine Naturfaser und/oder eine Chemiefaser aufweisen, wobei bevorzugt die Fasern aus einem oder mehreren aus Polyester, Polypropylen, Polyethylen, Polyamid, Baumwolle, Hanf, Gras, und/oder Flachs bestehen oder aufweisen.

8. Endstelle (1) nach einem der vorangegangenen Ansprüche, bei der mindestens einige, oder alle, der Fasern (8) des Textils (7) in eine Transportrichtung (F) der Rutsche (2) ausgerichtet sind, und/oder bei der mindestens einige, oder alle, der Fasern (8) des Textils (7) entgegen der Transportrichtung (F) der Rutsche (2) ausgerichtet sind.

9. Endstelle (1) nach einem der vorangegangenen Ansprüche, bei der die Fasern (8) eine Länge von 1 mm bis 40 mm haben, bevorzugt von 1,5 mm bis 20 mm, besonders bevorzugt von 2,5 mm bis 8 mm, und/oder das Textil (7) eine Höhe von 4 mm bis 10 mm, bevorzugt von 4,5 mm bis 9 mm, besonders bevorzugt von 6,2 mm bis 8,2 mm hat.

10. Endstelle (1) nach einem der vorangegangenen Ansprüche, bei der die Fasern (8) des Textils (7) derart ausgeführt sind, bevorzugt eine derartige Steifigkeit aufweisen, zueinander beabstandet sind und/oder eine derartige Länge haben, dass wenn ein Transportgut (5) auf dem Textil (7) transportiert wird, eine Kante des Transportguts (5) zwischen die Fasern (8) eintauchbar ist und/oder das Transportgut (5) einen Wellenkamm (11) aus Fasern (8) vor sich herschiebt.

11. Endstelle (1) nach einem der vorangegangenen Ansprüche, bei der die Fasern (8) dazu eingerichtet sind, wenn ein Transportgut (5) auf dem Textil (7) transportiert wird, das Transportgut (5) abzubremsen, bevorzugt auf eine Geschwindigkeit zwischen 0,01 m/s und 4,5 m/s abzubremsen, besonders bevorzugt auf eine Geschwindigkeit zwischen 1,5 m/s und 4,5 m/s abzubremsen.

12. Endstelle (1) nach einem der vorangegangenen Ansprüche 2 bis 11, bei der der Übergabebereich (3) unter einem Übergabewinkel (β) geneigt ist, so dass der Übergabebereich (3) gerade in die Rutsche (2) übergeht, und/oder wobei der Übergabebereich (3) eine Rollenbahn (10) aufweist.

13. Sorter (100), aufweisend eine Zuführstelle (103) zum Einschleusen oder Zuführen eines Transportguts (5), eine Endstelle (1) nach einem der vorangegangenen Ansprüche zum Ausschleusen und/oder Speichern des Transportguts (5), und eine Transportvorrichtung (105) mit mindestens einer Transporteinheit (102), bevorzugt einem Lastaufnahmemittel eines Kippschalensorters, eines Quergurtsorters und/oder eines Fallklappensorters, zum Transportieren des Transportguts (5) von der Zuführstelle (103) zur Endstelle (1).

14. Verfahren zum Entnehmen oder Ausschleusen eines Transportguts mit einer Endstelle, wobei das Verfahren die folgenden Schritte aufweist:
- Übergeben eines Transportguts (5) an eine Rutsche (2);
- Befördern des Transportguts (5) mit der Rutsche (2) zu einer Sammelstelle (4), wobei das Transportgut (5) beim Befördern auf einer Oberfläche der Rutsche (2) rutscht;
**dadurch gekennzeichnet, dass** beim Befördern des Transportguts (5) mit der Rutsche (2) das Transportgut (5) von einem Textil (7) mit freistehenden Fasern (8), das zumindest abschnittsweise auf der Oberfläche (6) angeordnet ist und/oder Teil der Oberfläche (6) ist, abgebremst wird.

15. Verfahren nach Anspruch 14, bei dem das Transportgut (5) mit und/oder durch einen Übergabebereich (3) an die Rutsche (2) übergeben wird.

## Geänderte Patentansprüche

### Geänderte Patentansprüche gemäss Regel 137(2) EPÜ.

1. Endstelle (1) für einen Sorter (100), aufweisend eine Rutsche (2) und einen Sammelbereich (4) zur Entnahme eines Transportguts (5) aus der Endstelle (1), wobei die Endstelle (1) einen Übergabebereich (3) zur Übergabe des Transportguts (5) aufweist, wobei die Rutsche (2) zwischen Übergabebereich (3) und Sammelbereich (4) angeordnet ist, wobei die Rutsche (2) dazu eingerichtet ist, das an den Übergabebereich (3) übergebene Transportgut (5) zu dem Sammelbereich (4) zu befördern, wobei, wenn das Transportgut (5) von der Rutsche (2) befördert ist, das Transportgut (5) auf einer Oberfläche (6) der Rutsche (2) rutscht, **dadurch gekennzeichnet, dass** die Oberfläche (6) zumindest abschnittsweise ein Textil (7) mit freistehenden Fasern (8) ist oder aufweist.

2. Endstelle (1) nach Anspruch 1, bei der das Textil (7) ein Schnittflorteppich und/oder ein Schnittvelour ist oder aufweist.

3. Endstelle (1) nach einem der vorangegangenen Ansprüche, bei der das Textil (7) und/oder die Oberfläche (6) getuftet ist.

4. Endstelle (1) nach einem der vorangegangenen Ansprüche, bei der das Textil (7) die Oberfläche (6) vollständig bedeckt und/oder entlang der gesamten Länge und/oder Breite der Rutsche (2) angeordnet ist.

5. Endstelle (1) nach einem der vorangegangenen Ansprüche, bei der die Rutsche (2) unter einem Winkel (α) zwischen 15° bis 40°, bevorzugt zwischen 18° bis 28°, besonders bevorzugt zwischen 22° und 25°, zu einer Aufstellfläche der Endstelle (1) geneigt ist.

6. Endstelle (1) nach einem der vorangegangenen Ansprüche, bei der die Fasern (8) aus einer Naturfaser und/oder einer Chemiefaser bestehen, und/oder eine Naturfaser und/oder eine Chemiefaser aufweisen, wobei bevorzugt die Fasern aus einem oder mehreren aus Polyester, Polypropylen, Polyethylen, Polyamid, Baumwolle, Hanf, Gras, und/oder Flachs bestehen oder aufweisen.

7. Endstelle (1) nach einem der vorangegangenen Ansprüche, bei der mindestens einige, oder alle, der Fasern (8) des Textils (7) in eine Transportrichtung (F) der Rutsche (2) ausgerichtet sind, und/oder bei der mindestens einige, oder alle, der Fasern (8) des Textils (7) entgegen der Transportrichtung (F) der Rutsche (2) ausgerichtet sind.

8. Endstelle (1) nach einem der vorangegangenen Ansprüche, bei der die Fasern (8) eine Länge von 1 mm bis 40 mm haben, bevorzugt von 1,5 mm bis 20 mm, besonders bevorzugt von 2,5 mm bis 8 mm, und/oder das Textil (7) eine Höhe von 4 mm bis 10 mm, bevorzugt von 4,5 mm bis 9 mm, besonders bevorzugt von 6,2 mm bis 8,2 mm hat.

9. Endstelle (1) nach einem der vorangegangenen Ansprüche, bei der die Fasern (8) des Textils (7) derart ausgeführt sind, bevorzugt eine derartige Steifigkeit aufweisen, zueinander beabstandet sind und/oder eine derartige Länge haben, dass wenn ein Transportgut (5) auf dem Textil (7) transportiert wird, eine Kante des Transportguts (5) zwischen die Fasern (8) eintauchbar ist und/oder das Transportgut (5) einen Wellenkamm (11) aus Fasern (8) vor sich herschiebt.

10. Endstelle (1) nach einem der vorangegangenen Ansprüche, bei der die Fasern (8) dazu eingerichtet sind, wenn ein Transportgut (5) auf dem Textil (7) transportiert wird, das Transportgut (5) abzubremsen, bevorzugt auf eine Geschwindigkeit zwischen 0,01 m/s und 4,5 m/s abzubremsen, besonders bevorzugt auf eine Geschwindigkeit zwischen 1,5 m/s und 4,5 m/s abzubremsen.

11. Endstelle (1) nach einem der vorangegangenen Ansprüche, bei der der Übergabebereich (3) unter einem Übergabewinkel (β) geneigt ist, so dass der Übergabebereich (3) gerade in die Rutsche (2) übergeht, und/oder wobei der Übergabebereich (3) eine Rollenbahn (10) aufweist.

12. Sorter (100), aufweisend eine Zuführstelle (103) zum Einschleusen oder Zuführen eines Transportguts (5), eine Endstelle (1) nach einem der vorangegangenen Ansprüche zum Ausschleusen und/oder Speichern des Transportguts (5), und eine Transportvorrichtung (105) mit mindestens einer Transporteinheit (102), bevorzugt einem Lastaufnahmemittel eines Kippschalensorters, eines Quergurtsorters und/oder eines Fallklappensorters, zum Transportieren des Transportguts (5) von der Zuführstelle (103) zur Endstelle (1).

13. Verfahren zum Entnehmen oder Ausschleusen eines Transportguts mit einer Endstelle (1), wobei das Verfahren die folgenden Schritte aufweist:
- Übergeben eines Transportguts (5) an eine Rutsche (2) der Endstelle (1), wobei das Transortgut (5) durch einen Übergabebereich (3) der Endstelle (1) an die Rutsche (2) übergeben wird;
- Befördern des Transportguts (5) mit der Rutsche (2) zu einer Sammelstelle (4), wobei das Transportgut (5) beim Befördern auf einer Oberfläche der Rutsche (2) rutscht;
**dadurch gekennzeichnet, dass** beim Befördern des Transportguts (5) mit der Rutsche (2) das Transportgut (5) von einem Textil (7) mit freistehenden Fasern (8), das zumindest abschnittsweise auf der Oberfläche (6) angeordnet ist und/oder Teil der Oberfläche (6) ist, abgebremst wird.
